# EUROPEAN PATENT SPECIFICATION

(11) **EP 1 076 270 B1**
(45) Date of publication and mention of the grant of the patent: **01.03.2006**
(21) Application number: 00109625.4
(22) Date of filing: 05.05.2000
(51) Int. Cl.: G03G 15/08, G03G 15/32, G06K 15/12, H04N 1/00

(54) **Stabilization of toner consumption in an imaging device**
Stabilisierung des Tonerverbrauches in einer Bilderzeugungsvorrichtung
Stabilisation de la consommation de toner dans un dispositif de formation d'images

(30) Priority: 10.08.1999 US 371160
(43) Date of publication of application: 14.02.2001
(60) Divisional application: 04030167.3
(73) Proprietor: Hewlett-Packard Company, Palo Alto, CA 94304 (US)
(72) Inventor: Weaver, Jeffrey S., Boise, ID 83713 (US); Camis, Thomas, Boise, ID 83713 (US); Bearss, James G., Boise, ID 83714 (US)
(74) Representative: Schoppe, Fritz

(56) References cited:
- US-A- 5 349 377
- US-A- 5 652 947
- US-A- 5 708 917
- US-A- 5 867 198
- PATENT ABSTRACTS OF JAPAN vol. 1998, no. 04, 31 March 1998 (1998-03-31) & JP 09 323448 A (CANON INC), 16 December 1997 (1997-12-16)

## Description

### FIELD OF THE INVENTION

This invention relates in general to image forming devices and, more particularly, to controlling toner consumption in electrophotographic imaging devices.

### BACKGROUND OF THE INVENTION

In electrophotographic (EP) printing, such as in laser printers and copiers, a pattern of electrostatic charges corresponding to a print image is developed on an optical photoconductor (OPC) using radiated energy, either visible spectrum light or optical energy outside the visible light spectrum. Conventionally, near infrared laser light is used to develop an electrostatic image on the OPC. The OPC is usually a continuous surface such as a drum or belt.

The laser light scans across the charged surface of photosensitive material on the OPC in a succession of scan lines. Each scan line is logically divided into picture element (pixel) areas and the laser beam is modulated such that selected pixel areas are exposed to light. Pixel size (or pixel space) is defined by a given dot pitch, scan velocity and spot size of the printer. The exposure to light results in the reduction of voltage on the OPC at those select pixel locations forming a latent image pattern. Subsequently, toner is applied (deposited) onto those pixel locations to form a visible image and this image is then transferred to a print media (typically a sheet of paper).

The toner transferred onto the sheet media appears in a pattern of dots (or spots), with each dot corresponding to a pixel (or combination of pixels for developing tones). While dots are usually associated with the image on the sheet media and pixels are usually associated with the corresponding electronic image, the one-to-one correspondence of dots to pixels commonly results in the terms being used interchangeably.

For any given print engine, toner consumption depends upon the discharge voltage level on the OPC. Although pixel development may be controlled by modulation of the laser power, operation of the laser diode in a non-saturated mode is often not desirable because there are too many environmental factors that are difficult to control and that tend to cause less stable overall pixel development. For example, laser modulation is very sensitive to parameters such as aging of the laser diode and temperature conditions. However, a similar effect is accomplished by turning the laser full on (saturated mode) and full off for periods of time shorter than what is needed or budgeted for developing the full pixel (dot) size for a given dot pitch and scan velocity. This is known as pulse width modulation (PWM) of the laser diode. Specifically, PWM is the modification of the duty cycle of the video (laser) signal wave form within a unit amount of time and has the effect of changing the level of exposure intensity. The duty cycle is the percent of time the signal is in an active state (for exposing a pixel space) within the specified unit amount of time. In essence, PWM permits a sub-sized pixel (or portion of a pixel) to be developed on an OPC. Thus, if the laser beam is modulated (using PWM), the resultant variations in voltage on the OPC will ultimately be translated to proportionate amounts of toner mass being developed onto the OPC and then transferred onto a sheet of media. PWM is commonly used in applications such as gray scaling, halftoning, and color imaging (i.e., for precise mixing of colors as well as control of the intensity of the colors).

Regardless of whether a full laser diode pulse is applied to develop a full sized pixel, or whether the laser is modulated using PWM to develop a sub pixel, the amount of toner mass that is applied to the exposed area is critical to the quality of the resultant image that is transferred to media. Additionally, excessive toner that is unnecessarily developed onto the pixel or sub pixel is wasted. For example, too much developed toner mass tends to cause toner scatter, which is a dusting or blurring of the resultant image by the excess/wasted toner. This occurs in both monochrome and color imaging systems. This problem is magnified when the print engine utilizes an intermediate transfer belt. Print quality degradation is especially noticeable when printing text and fine detail because a cloud of toner surrounds the characters making them unclear. Additionally, toner scatter is exaggerated in connection with media that moves slower through the fusing system, such as with glossy paper.

Clearly, the EP printing process is inherently unstable with respect to toner mass development per unit area. In addition to image quality issues, this leads to difficulty in estimating toner cartridge life (toner usage) and some uncertainty in predicting the cost per page for a given print platform. If toner mass per unit area developed by the EP printing process were stable, the amount of toner consumed in printing a given page could be predicted from knowing how many of the possible dots on the page were actually printed. Although pixel (or dot) counting is conventional in the art, the accuracy of pixel counting varies from platform to platform in about the 15-25% range because of the uncertainty of actual toner mass development per unit area.

Although recent technologies have enabled more accurate toner level sensing in a toner cartridge for predicting the cartridge life (toner usage), the actual toner usage and cost per page predictability still varies from platform to platform because, again, of the uncertainty of actual toner mass development per unit area.

Accordingly, an object of the present invention is to assist in the stabilization of toner consumption for improving the estimating of toner usage and cost per page for a given print platform.

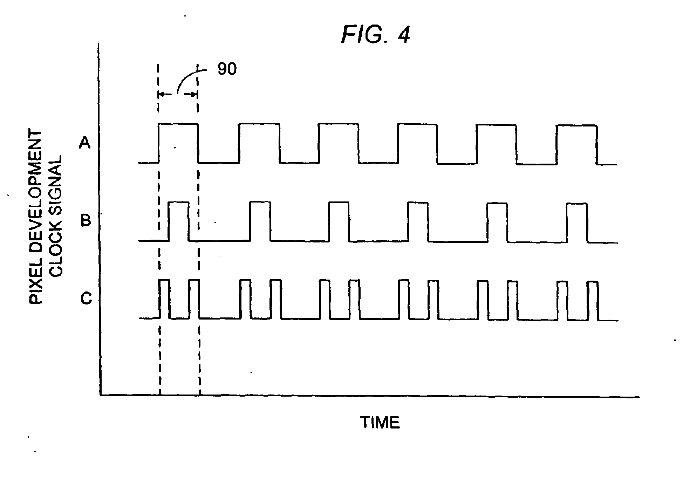

US 5,708,917 concerns a toner replenishment device for an image-forming apparatus which employs pixel density and toner density information. The replenishment of document D1 is to maintain a predetermined standard toner concentration within developing device 41 Bk, which accommodates black toner. In accordance with a first embodiment being described with regard to Figs. 4 to 15, this is achieved by every 30 pages, estimating the toner concentration and developing device 41 Bk, comparing the estimated toner concentration to a standard toner concentration and controlling the replenishment of the developing device 41 Bk based on the comparison. The toner concentration and developing device 41 Bk is determined by forming a latent image text pattern on the surface of photosensitive drum, measuring the amount of light reflected from the toner test image thus formed by AIDC sensors, calculating the amount of adhered toner therefrom, determining the developing efficiency, correcting the calculated developing efficiency by means of measured parameters as the absolute humidity and the current life time number of copies in order to obtain an expected developing efficiency for normal environmental conditions and then estimating the toner concentration and developing device 41 Bk based on the corrected developing efficiency.

US 5,867,198 describes a method for estimation of toner usage in digital xerographic copiers and printers. The method enhances the estimation of toner usage based on pixel counting by taking into account digital image dot spreading, which results in the area of a pixel not being fully developed and some areas outside the pixel being developed.

This object is achieved by the method defined in claim 1 and the device defined in claim 9.

According to principles of the present invention in a preferred embodiment, an imaging device is enabled to stabilize toner mass development by implementing a closed loop feedback system. Actual toner mass used is compared with a target mass reference to produce an error signal for modifying toner consumption in the imaging device.

A method for stabilizing toner mass used in an imaging device includes calculating first indicia indicative of an actual mass per area of toner consumed in the imaging device, comparing the first indicia with second indicia indicative of a target mass per area of toner consumed, and modifying toner consumption in the imaging device based on the comparing.

Also in a preferred embodiment, a toner level sensed is compared to an original toner reference amount to produce a toner mass used. Pixels rendered are tracked to calculate a total area imaged relative to a time frame established in association with the original toner reference amount. The total mass used is divided by the total area imaged to produce the actual mass per area used. Toner consumption is modified using laser pulse width modulation or pixel masking such that subsequent actual mass per area of toner consumed approaches the target mass per unit area.

Other objects, advantages, and capabilities of the present invention will become more apparent as the description proceeds.

### DESCRIPTION OF THE DRAWINGS

FIG. 1 is high level block diagram of a page printer incorporating the present invention apparatus and method for stabilizing toner consumption.
FIG. 2 is a schematic block diagram depicting a preferred embodiment of the present invention for stabilizing toner consumption in the printer of FIG. 1.
FIG. 3 is a flow chart depicting a preferred method of the present invention.
FIG. 4 is a timing diagram depicting three signals representing exemplary clock pulses for modifying pixel development under the present invention.

### DETAILED DESCRIPTION OF THE INVENTION

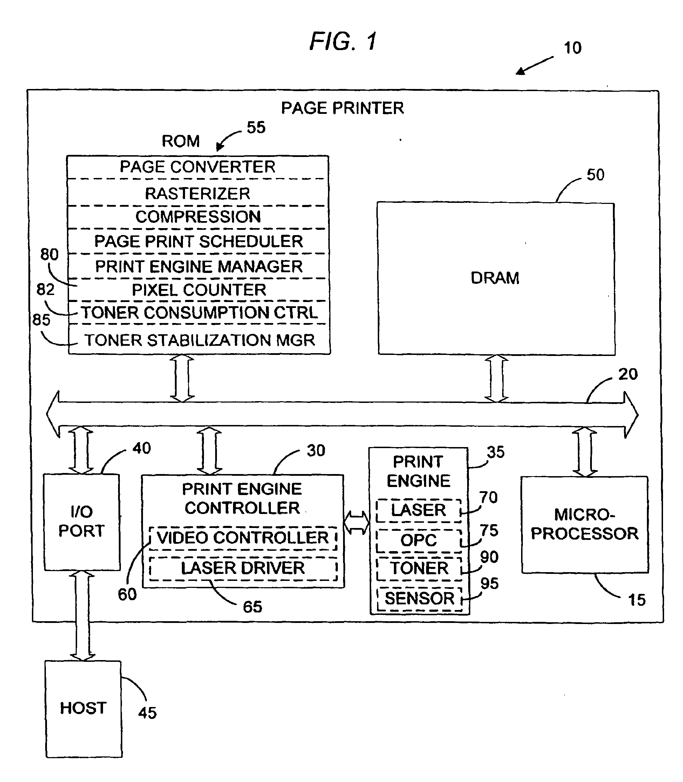

FIG. 1 is a high level block diagram of a page printer 10 incorporating the present invention apparatus and method for stabilizing toner consumption for improving the estimating of toner usage and cost per page within the printer. Page printer 10 is controlled by a microprocessor 15 which communicates with other elements of the system via bus 20. A print engine controller 30 and associated print engine 35 connect to bus 20 and provide the print output capability for the page printer. For purposes of this disclosure, print engine 35 is a laser printer that employs an electrophotographic drum and imaging system utilizing discharge area development that is well known in the art. However, as will be obvious to those of ordinary skill in the art, the present invention is similarly applicable to other types of printers and/or imaging devices including, for example, facsimile machines, digital copiers, or the like.

An input/output (I/O) port 40 provides communications between the page printer 10 and a host computer 45 and receives page descriptions (or raster data) from the host for processing within the page printer. A dynamic random access memory (DRAM) 50 provides a main memory for the page printer for storing and processing a print job data stream received from host 45. A read only memory (ROM) 55 holds firmware which controls the operation of microprocessor 15 and page printer 10. Code procedures stored in ROM 55 include, for example, a page converter, rasterizer, compression code, page print scheduler, print engine manager, and/or other image processing procedures (not shown) for generating an image from a print job data stream. The page converter firmware converts a page description received from the host to a display command list, with each display command defining an object to be printed on the page. The rasterizer firmware converts each display command to an appropriate bit map (rasterized strip or band) and distributes the bit map into memory 50. The compression firmware compresses the rasterized strips as specified or in the event insufficient memory exists in memory 50 for holding the rasterized strips.

Additionally, ROM 55 includes Pixel Counter 80 for counting pixels rendered by print engine 35. Pixel Counter 80 is any conventional pixel counting routine in the art, such as, for example, any one or more of the methods and/or apparatus taught in U.S. Patent Nos. 5,802,420, 5,797,061, 5,794,094, 5,754,708, 5,754,312, 5,636,032, 5,572,292, 5,349,377, and 5,204,698.

ROM 55 further includes Toner Consumption Controller 82 for controlling, generally, toner consumption (toner usage in pixel development) in printer 10. In a preferred embodiment, Toner Consumption Controller 82 controls toner deposition for an image being processed in printer 10 by means of modifying laser pulse width modulations as will be discussed more fully herein. Alternatively, other conventional routines in the art capable of controlling toner usage/deposition are similarly feasible. For example, the methods and/or apparatus taught in U.S. Patent No. 5,483,625 may be used. In any case, it should be noted that although Pixel Counter 80 and Toner Consumption Controller 82 are depicted as firmware, it will be obvious that hardware specific implementations (i.e., in an ASIC) are also feasible, depending on the overall design criteria of printer 10.

Importantly, under principles of the present invention, ROM 55 also includes Toner Stabilization Manager 85. Toner Stabilization Manager 85 includes routines, tables and/or other data structures necessary for managing and stabilizing toner consumption by printer 10 as will be discussed more fully herein.

In general, the operation of page printer 10 commences when it receives a page description from host computer 45 via I/O port 40 in the form of a print job data stream. The page description is placed in DRAM 50 and/or a cache memory associated with microprocessor 15. Microprocessor 15 accesses the page description, line by line, and builds a display command list using the page converter firmware in ROM 55. As the display command list is being produced, the display commands are sorted by location on the page and allocated to page strips in memory 50. When all page strips have been evaluated, rasterized, compressed, etc. for processing by print engine 35, the page is closed and the rasterized strips are passed to print engine 35 by print engine controller 30, thereby enabling the generation of an image (i.e., text/graphics etc). The page print scheduler controls the sequencing and transferring of page strips to print engine controller 30. The print engine manager controls the operation of print engine controller 30 and, in turn, print engine 35.

Processor 15 feeds to a video controller 60 a raster image of binary values which represent the image to be imprinted on a page. The video controller, in response, feeds a series of binary data signals to a laser driver 65 which, in turn, modulates laser 70 in accordance with the binary data signals.

As conventional in the art, the modulated beam from laser 70 is directed at a rotating, faceted mirror which scans the beam across an imaging lens which directs the scanned beam to a mirror which redirects the scanned beam onto a moving OPC 75. The laser beam is scanned across the OPC to cause selective discharge thereof in accordance with the modulation of the beam. At the termination of each scan action, the laser beam is incident on a photodetector which outputs a beam detect signal that is used to synchronize the actions of video controller 60 and processor 15. Subsequent to the selective discharge of OPC 75, toner is applied (deposited) from toner cartridge 90 onto the discharged pixel locations to form a visible image. The visible image is then transferred to a print media such as a sheet of paper that is passed through printer 10. Toner usage amounts out of toner cartridge 90 are monitored with toner level sensor 95. Toner level sensor 95 is any conventional sensor in the art capable of detecting with a reasonable degree of accuracy the amount of toner remaining in cartridge 95. Examples of such sensor technologies include, for example, any one or more of the apparatus and/or methods taught in U.S. Patent Nos. 5,587,770, 5,557,368, 5,465,619, 5,499,077, 5,214,475, 4,786,869, 4,397,265, 4,314,242, and 4,313,343.

Further to the operation of printer 10 and according to principles of the present invention, Toner Stabilization Manager 85: (i) determines an actual mass per area of toner deposited onto OPC 75 (based on toner level readings from sensor 95 and based on Pixel Counter 80), (ii) calculates a mass per area error signal relative to a target mass per area signal, and (iii) modifies Toner Consumption Controller algorithm 82 for stabilizing toner consumption in printer 10.

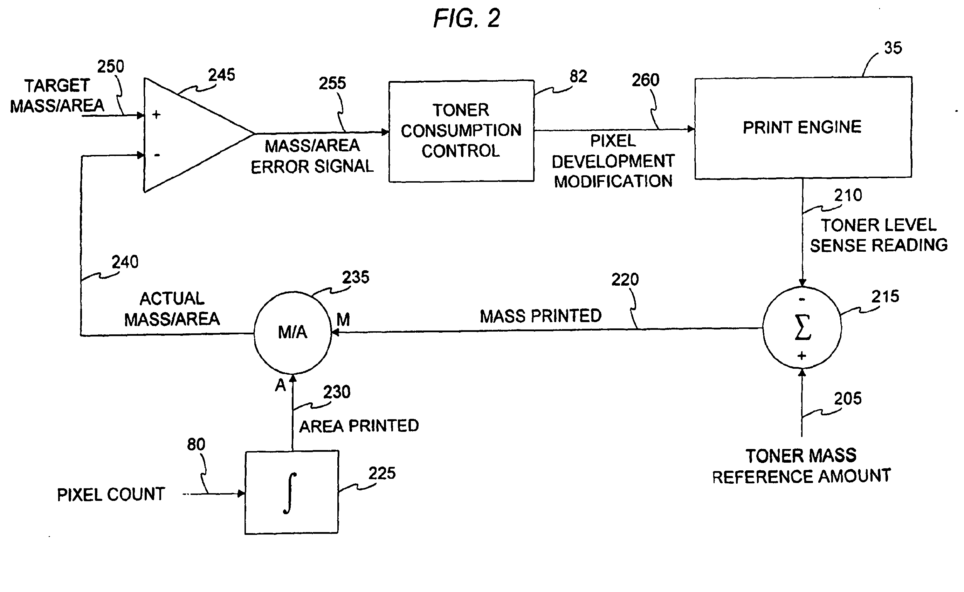

Referring now to FIG. 2, a schematic block diagram depicts a preferred embodiment of the present invention for stabilizing toner consumption in printer 10. First, when a toner cartridge 90 is installed in printer 10, a toner mass reference amount 205 is determined that identifies how much toner exists in the cartridge 90. This reference amount is detected by toner sensor 95 (or other detection scheme known in the art) and is communicated to Toner Stabilization Manager 85 and stored for reference purposes. As print engine 35 proceeds with imaging operations, toner sensor 95 continues to monitor 210 the toner level in cartridge 90. The toner level sensed 210 by sensor 95 during operation of printer 10 (i.e., during usage of cartridge 90) is summed 215 (or differenced) with the reference amount 205, the difference being a value or signal indicative of the amount of toner used, or in other words, the toner Mass Printed 220. Preferably, a change in toner level sensed 210 during operation of printer 10 is detectable by sensor 95 over a minimal number of pages printed by print engine 35. In this context, the more finely accurate the toner level sense reading 210, then the quicker and more responsive the present invention becomes for stabilizing toner consumption relative to the number of pages printed.

Additionally, during operation of print engine 35, Pixel Counter 80 continually counts pixels rendered and tracks the sum (or integral) 225 of such pixels to produce a value or signal indicative of a total Area Printed by the rendered pixels. The total Area Printed is determined based on a reference in time that corresponds to when the toner mass reference amount 205 was determined. Consequently, 235, for this referenced operation interval or time frame, Toner Stabilization Manager 85 divides the Mass Printed 220 by the Area Printed 230 to produce a value or signal indicative of an Actual Mass/Area 240 amount of toner utilized by printer 10.

Importantly, now, Toner Stabilization Manager 85 compares 245 the Actual Mass/Area 240 with a Target Mass/Area 250. The Target Mass/Area is a value or signal indicative of a desired amount of toner mass/area to be used by printer 10. The Target Mass/Area is established by one or more factors that affect one or more operational parameters of printer 10, such as image quality or cost per page. For example, if a slightly less quality image is an acceptable factor (i.e., by using/developing less toner on the image), then the Target Mass/Area is set to a lower value and, consequently, the cost per page is reduced. On the other hand, if image quality is of prime importance, then the Target Mass/Area is set to an increased value and, consequently, the cost per page is increased. In any case, the Target Mass/Area may be set independent of current operational settings/results of printer 10 or, alternatively, relative to the current operational settings/results of printer 10. Additionally, the Target Mass/Area signal or value is input to printer 10 from an external source by conventional means such as software (i.e., print driver) in communication with printer 10, or a control panel of printer 10 in communication with firmware in ROM 55.

The comparison 245 of the Actual Mass/Area 240 and the Target Mass/Area 250 produces a Mass/Area Error Signal (value) 255. The Mass/Area Error Signal is then introduced into the Toner Consumption Controller procedure 82 to modify toner consumption accordingly in print engine 35. For example, if the Mass/Area Error Signal is indicative of a need to reduce the Actual Mass/Area of toner to approach the Target Mass/Area (i.e., to reduce toner consumption and cost), then Toner Consumption Controller 82 responds to the Error Signal and modifies pixel development 260 accordingly for print engine 35. For example, in a preferred embodiment, if toner consumption is to be reduced, pixel development is modified by varying the laser's 70 pulse width modulation (PWM) signals for print engine 35. Alternatively, reduced pixel development occurs by using a checkerboard development pattern (mask), a draft/economy print mode, or other reduced print quality or toner saving modes conventional in the art.

Clearly, the present invention closed loop feedback drives the Actual Mass/Area 240 to match the Target Mass/Area 250 whereby stabilization of toner usage is achieved for improving the estimating of toner usage and cost per page for printer 10.

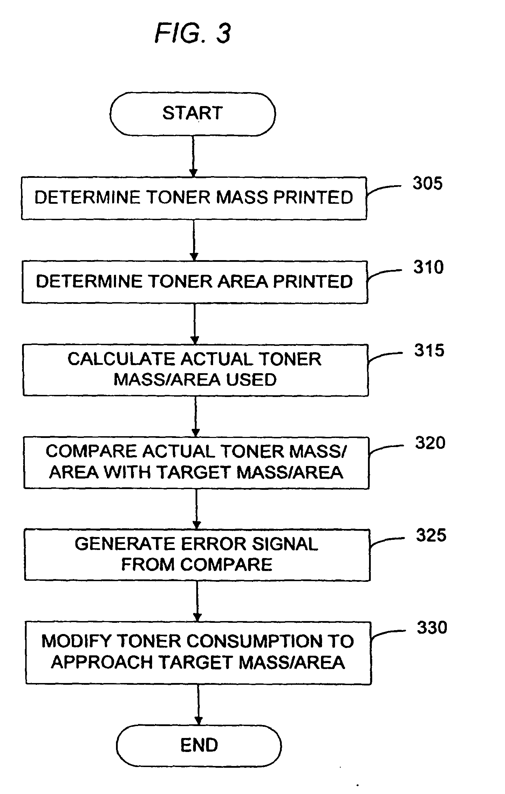

FIG. 3 is a flow chart depicting a preferred method of the present invention for toner stabilization in an imaging device (such as printer 10 of FIG. 1). First, 305, an actual toner Mass Printed is determined. In a preferred embodiment, this includes taking the difference of an amount of toner level sensed in toner cartridge 90 with a toner mass reference amount. Next (or additionally), an actual Area Printed is determined 310. In a preferred embodiment, this includes counting pixels rendered and integrating using a predetermined average pixel area or a more actual pixel area based on, for example, laser pulse width modulation signals. The number of pixels counted is relative to a time frame established by when the toner mass reference amount was set.

Subsequently, 315, an Actual Mass/Area of toner used is calculated by dividing the actual Mass Printed by the actual Area Printed. Then, 320, the Actual Mass/Area is compared to a Target Mass/Area and an error value is generated 325. The Target Mass/Area is input at a control panel of the imaging device or via a software driver configuration. The error value is used 330 by a toner consumption control procedure to modify pixel development in the imaging device such that the Actual Mass/Area of toner usage approaches the Target Mass/Area, thus stabilizing toner consumption to the Target Mass/Area. Again, pixel development modification is accomplished using pulse width modulation, pattern mask, draft/economy print mode, or other reduced print quality or toner saving modes.

Referring now to FIG. 4, a timing diagram depicts three signals "A", "B" and "C" representing exemplary clock pulses that may be applied to laser driver 65 for pulsing laser 70 as controlled by Toner Consumption Control procedure 82 for modifying pixel development 260 under the present invention. These signals represent a preferred method of using laser pulse width modulation (PWM) for modifying pixel development in order to stabilize toner consumption in response to the Mass/Area Error Signal 255.

Specifically, in this preferred embodiment, toner consumption control is achieved by pulse width modulating the laser such that the OPC 75 potential is decreased to allow varying amounts of developed toner mass onto the OPC. In other words, the developed toner mass is precisely controlled with a simple change to laser exposure pulse "on-time". Pulse width modulation is applied to each individual color plane as necessary and is used to help improve/control the quality of the developed spots, line edges and images by controlling the exposure profiles and spot geometry.

Thus, in reference now again to the exemplary varying PWM signals of FIG. 4, signal "A" represents a full 100% clock pulse signal for full pixel development (exposure) within a reference time frame 90. Reference time frame 90 is based on a given dot pitch, scan velocity and spot size of printer 10. Signal "B" represents a 50% centered clock pulse signal for a generally 50% centered pixel development. In contrast, signal "C" represents a 50% split clock pulse signal for split pixel development. Signal "C" represents a split pulse within the reference time frame 90. Importantly, signal "C" depicts how split pulsing the clock signal includes pulsing the clock signal at least twice within the full pulse width reference time frame 90 such that the at least two pulses are not immediately adjacent to each other. This split pulsing depicted in signal "C" is referred to herein as split-subpixel modulation (SSM). Alternatively, split pulsing occurs in a super pixel (multi-cell) context. For example, if a super pixel is defined as a four by four cell pixel, then SSM occurs at any point within the reference frame of the four by four super pixel. Importantly, any one of the PWM signals "A", "B" or "C", or any other PWM signal or combination of PWM signals may be used for modifying pixel development in order to stabilize toner mass/unit consumption in response to the Mass/Area Error Signal 255 under the present invention.

Finally, it will be obvious to one of ordinary skill in the art that the present invention is easily implemented utilizing any of a variety of components and tools existing in the art. Moreover, while the present invention has been described by reference to specific embodiments, it will be apparent that other alternative embodiments and methods of implementation or modification may be employed without departing from the scope of the invention as claimed.

## Claims

1. A method of stabilizing toner consumption in an imaging device (10), comprising:
(a) calculating first indicia (240) indicative of an actual mass per area of toner consumed in the imaging device;
(b) comparing (245) the first indicia (240) with second indicia (250) indicative of a target mass per area of toner consumed, the comparing producing a compare result (255); and,
(c) modifying toner consumption (82,260) in the imaging device based on the compare result such that a subsequent actual mass per area of toner consumed approaches the target mass per unit area,
wherein calculating the first indicia (240) includes calculating a mass amount (220) of toner used by the imaging device, calculating an area imaged (230) by the imaging device, and then dividing (235) the mass by the area to obtain the actual mass per area (240) of toner consumed, and
wherein the mass amount (220) of toner is calculated using: (i) a detected amount of toner (210) currently available for use in the imaging device, and (ii) a reference amount of toner (205) originally available for use in the imaging device.

2. The method of claim 1 wherein the area imaged (230) is calculated using pixel counting.

3. The method of claim 1 wherein the second indicia (250) is input to the imaging device from an external source.

4. The method of claim 1 wherein the compare result includes a toner mass per area error signal (255) indicative of a difference in the actual mass per area of toner consumed and the target mass per area of toner consumed.

5. The method of claim 1 wherein modifying toner consumption includes modifying pixel development (260) in the imaging device.

6. The method of claim 5 wherein modifying pixel development (260) includes modifying pulse width modulation of a laser in the imaging device.

7. The method of claim 5 wherein modifying pixel development (260) includes using a modified pixel development mask pattern.

8. The method of claim 1 wherein the imaging device (10) is selected from an electrophotographic printer, a facsimile device, or a digital copier.

9. An imaging device (10), comprising:
(a) a print engine (35);
(b) means (80, 85, 95) for calculating first indicia (240) indicative of an actual mass per area of toner consumed in the print engine;
(c) means (85,245) for comparing the first indicia (240) with second indicia (250) indicative of a target mass per area of toner consumed, the comparing producing a compare result (255); and,
(d) means (85,82,260) for modifying toner consumption in the print engine based on the compare result such that a subsequent actual mass per area of toner consumed approaches the target mass per unit area
(e) means for storing a reference amount.of toner (205) originally available for use by the print engine (10); and
(f) a toner sensor (95) for detecting an amount of toner currently available for use by the print engine; wherein
the means for calculating the first indicia (240) includes a means for calculating a mass amount (220) of toner used by the imaging device using the reference amount of toner (205) and the detected amount of toner, calculating an area imaged (230) by the imaging device, and then dividing (235) the mass by the area to obtain the actual mass per area (240) of toner consumed

10. The imaging device of claim 9 further comprising
pixel counting apparatus (80) for counting pixels rendered for imaging by the print engine and for determining the area imaged by the print engine.

11. The imaging device of claim 9 wherein the compare result includes a toner mass per area error signal (255) indicative of a difference in the actual mass per area (240) of toner consumed and the target mass per area (250) of toner consumed.

12. The imaging device of claim 9 wherein the means for modifying toner consumption includes means for modifying pixel development (260) in the imaging device.

13. The imaging device of claim 9 wherein the imaging device (10) is selected from an electrophotographic printer, a facsimile device, or a digital copier.

## Patentansprüche

1. Ein Verfahren zum Stabilisieren von Tonerverbrauch in einer Bilderzeugungsvorrichtung (10), das folgende Schritte umfasst:
(a) Berechnen erster Hinweise (240), die eine tatsächliche Flächenmasse von Toner anzeigen, der in der Bilderzeugungsvorrichtung verbraucht wird;
(b) Vergleichen (245) der ersten Hinweise (240) mit zweiten Hinweisen (250), die eine Zielflächenmasse von verbrauchtem Toner anzeigen, wobei das Vergleichen ein Vergleichsergebnis (255) erzeugt; und
(c) Modifizieren von Tonerverbrauch (82, 260) in der Bilderzeugungsvorrichtung auf der Basis des Vergleichsergebnisses, so dass sich eine nachfolgende tatsächliche Flächenmasse von verbrauchtem Toner der Zielflächenmasse nähert,
wobei das Berechnen der ersten Hinweise (240) das Berechnen einer Massenmenge (220) an Toner, der durch die Bilderzeugungsvorrichtung verwendet wird, das Berechnen einer Fläche, die durch die Bilderzeugungsvorrichtung abgebildet wird (230), und dann Dividieren (235) der Masse durch die Fläche umfasst, um die tatsächliche Flächenmasse (240) von verbrauchtem Toner zu erhalten, und
wobei die Massenmenge (220) an Toner berechnet wird unter Verwendung von: (i) einer erfassten Tonermenge (210), die derzeit für die Verwendung in der Bilderzeugungsvorrichtung verfügbar ist, und (ii) einer Referenztonermenge (205), die ursprünglich für die Verwendung in der Bilderzeugungsvorrichtung verfügbar ist.

2. Das Verfahren gemäß Anspruch 1, bei dem die abgebildete Fläche (230) unter Verwendung von Pixelzählen berechnet wird.

3. Das Verfahren gemäß Anspruch 1, bei dem die zweiten Hinweise (250) von einer externen Quelle in die Bilderzeugungsvorrichtung eingegeben werden.

4. Das Verfahren gemäß Anspruch 1, bei dem das Vergleichsergebnis ein Tonerflächenmassefehlersignal (255) umfasst, das eine Differenz bei der tatsächlichen Flächenmasse von verbrauchtem Toner und der Zielflächenmasse von verbrauchtem Toner anzeigt.

5. Das Verfahren gemäß Anspruch 1, bei dem das Modifizieren von Tonerverbrauch das Modifizieren von Pixelentwicklung (260) in der Bilderzeugungsvorrichtung umfasst.

6. Das Verfahren gemäß Anspruch 5, bei dem das Modifizieren von Pixelentwicklung (260) das Modifizieren von Pulsbreitenmodulation eines Lasers in der Bilderzeugungsvorrichtung umfasst.

7. Das Verfahren gemäß Anspruch 5, bei dem das Modifizieren von Pixelentwicklung (260) das Verwenden einer modifizierten Pixelentwicklungsmaskenstruktur umfasst.

8. Das Verfahren gemäß Anspruch 1, bei dem die Bilderzeugungsvorrichtung (10) aus einem elektrophotographischen Drucker, einem Faksimilegerät oder einem Digitalkopierer ausgewählt ist.

9. Eine Bilderzeugungsvorrichtung (10), die folgende Merkmale umfasst:
(a) eine Druckmaschine (35);
(b) eine Einrichtung (80, 85, 95) zum Berechnen erster Hinweise (240), die eine tatsächliche Flächenmasse von verbrauchtem Toner in der Druckmaschine anzeigen;
(c) eine Einrichtung (85, 245) zum Vergleichen der ersten Hinweise (240) mit zweiten Hinweisen (250), die eine Zielflächenmasse von verbrauchtem Toner anzeigen, wobei das Vergleichen ein Vergleichsergebnis (255) erzeugt; und
(d) eine Einrichtung (85, 82, 260) zum Modifizieren von Tonerverbrauch in der Druckmaschine auf der Basis des Vergleichsergebnisses, so dass sich eine nachfolgende tatsächliche Flächenmasse von verbrauchtem Toner der Zielflächenmasse nähert;
(e) eine Einrichtung zum Speichern einer Referenztonermenge (205), die ursprünglich für die Verwendung durch die Druckmaschine (10) verfügbar ist; und
(f) einen Tonersensor (95) zum Erfassen einer Tonermenge, die derzeit für die Verwendung durch die Druckmaschine verfügbar ist; wobei
die Einrichtung zum Berechnen der ersten Hinweise (240) eine Einrichtung zum Berechnen einer Massenmenge (220) an Toner, der durch die Bilderzeugungsvorrichtung verwendet wird, unter Verwendung der Referenztonermenge (205) und der erfassten Tonermenge, zum Berechnen einer Fläche, die durch die Bilderzeugungsvorrichtung abgebildet wird (230), und dann Dividieren (235) der Masse durch die Fläche umfasst, um die tatsächliche Flächenmasse (240) von verbrauchtem Toner zu erhalten.

10. Die Bilderzeugungsvorrichtung gemäß Anspruch 9, die ferner folgendes Merkmal umfasst:
eine Pixelzählvorrichtung (80) zum Zählen von Pixeln, die für die Bilderzeugung durch die Druckmaschine aufbereitet werden, und zum Bestimmen der Fläche, die durch die Druckmaschine abgebildet wird.

11. Die Bilderzeugungsvorrichtung gemäß Anspruch 9, bei der das Vergleichsergebnis ein Tonerflächenmassefehlersignal (255) umfasst, das eine Differenz bei der tatsächlichen Flächenmasse (240) von verbrauchtem Toner und der Zielflächenmasse (250) von verbrauchtem Toner anzeigt.

12. Die Bilderzeugungsvorrichtung gemäß Anspruch 9, bei der die Einrichtung zum Modifizieren von Tonerverbrauch eine Einrichtung zum Modifizieren von Pixelentwicklung (260) in der Bilderzeugungsvorrichtung umfasst.

13. Die Bilderzeugungsvorrichtung gemäß Anspruch 9, bei der die Bilderzeugungsvorrichtung (10) aus einem elektrophotographischen Drucker, einem Faksimilegerät oder einem Digitalkopierer ausgewählt ist.

## Revendications

1. Procédé consistant à stabiliser la consommation de toner dans un dispositif d'imagerie (10), comprenant les étapes consistant à :
(a) calculer un premier indice (240) indicatif d'une masse surfacique réelle de toner consommée dans le dispositif d'imagerie ;
(b) comparer (245) le premier indice (240) avec un second indice (250) indicatif d'une masse surfacique cible de toner consommé, la comparaison produisant un résultat à comparer (255) ; et
(c) modifier une consommation de toner (82, 260) dans le dispositif d'imagerie sur la base du résultat à comparer de telle sorte qu'une masse surfacique réelle ultérieure de toner consommé approche la masse cible par unité de surface,
dans lequel le calcul du premier indice (240) inclut le calcul d'une quantité de masse (220) de toner utilisée par le dispositif d'imagerie, le calcul d'une aire représentée (230) par le dispositif d'imagerie et, ensuite, la division (235) de la masse par l'aire pour obtenir la masse surfacique réelle (240) de toner consommé, et
dans lequel la quantité de masse (220) de toner est calculée en utilisant : (i) une quantité détectée de toner (210) à présent disponible pour une utilisation dans le dispositif d'imagerie, et (ii) une quantité de référence de toner (205) à l'origine disponible pour une utilisation dans le dispositif d'imagerie.

2. Procédé selon la revendication 1, dans lequel l'aire représentée (230) est calculée en utilisant un comptage de pixel.

3. Procédé selon la revendication 1, dans lequel le second indice (250) est entré dans le dispositif d'imagerie à partir d'une source externe.

4. Procédé selon la revendication 1, dans lequel le résultat à comparer inclut un signal d'erreur de masse surfacique de toner (255) indicatif d'une différence de la masse surfacique réelle de toner consommé et de la masse surfacique cible de toner consommé.

5. Procédé selon la revendication 1, dans lequel le fait de modifier la consommation de toner inclut le fait de modifier le développement de pixel (260) dans le dispositif d'imagerie.

6. Procédé selon la revendication 5, dans lequel le fait de modifier le développement de pixel (260) inclut le fait de modifier la modulation de largeur d'impulsion d'un laser dans le dispositif d'imagerie.

7. Procédé selon la revendication 5, dans lequel le fait de modifier le développement de pixel (260) inclut l'utilisation d'un dessin de masque de développement de pixel modifié.

8. Procédé selon la revendication 1, dans lequel le dispositif d'imagerie (10) est choisi parmi une imprimante électrophotographique, un télécopieur ou une photocopieuse numérique.

9. Dispositif d'imagerie (10) comprenant :
(a) un moteur d'impression (35) ;
(b) des moyens (80, 85, 95) pour calculer le premier indice (240) indicatif d'une masse surfacique réelle de toner consommé dans le moteur d'impression ;
(c) des moyens (85, 245) pour comparer le premier indice (240) avec le second indice (250) indicatif d'une masse surfacique cible de toner consommé, la comparaison produisant un résultat à comparer (255) ; et
(d) des moyens (85, 82, 260) pour modifier la consommation de toner dans le moteur d'impression sur la base du résultat à comparer de telle sorte qu'une masse surfacique réelle ultérieure de toner consommé approche la masse cible par unité de surface ;
(e) des moyens pour stocker une quantité de référence de toner (205) à l'origine disponible pour une utilisation par le moteur d'impression (10) ; et
(f) un senseur de toner (95) pour détecter une quantité de toner à présent disponible pour une utilisation par le moteur d'impression ; dans lequel
les moyens pour calculer le premier indice (240) inclut un moyen pour calculer une quantité de masse (220) de toner utilisé par le dispositif d'imagerie en utilisant le quantité de référence de toner (205) et la quantité détectée de toner, en calculant une aire représentée (230) par le dispositif d'imagerie et, ensuite, en divisant la masse par l'aire pour obtenir la masse surfacique réelle (240) du toner consommé.

10. Dispositif d'imagerie selon la revendication 9, comprenant en outre un appareil de comptage de pixel (80) pour compter les pixels rendus pour une représentation par le moteur d'impression et pour déterminer l'aire représentée par le moteur d'impression.

11. Dispositif d'imagerie selon la revendication 9, dans lequel le résultat à comparer inclut un signal d'erreur de masse surfacique de toner (255) indicatif d'une différence de la masse surfacique réelle (240) de toner consommé et de la masse surfacique cible (250) de toner consommé.

12. Dispositif d'imagerie selon la revendication 9, dans lequel le moyen pour modifier la consommation de toner inclut un moyen pour modifier le développement de pixel (260) dans le dispositif d'imagerie.

13. Dispositif d'imagerie selon la revendication 9, dans lequel le dispositif d'imagerie (10) est choisi parmi une imprimante électrophotographique, un télécopieur ou une photocopieuse numérique.
